# FASCICULE DE BREVET EUROPEEN

(11) **EP 2 946 650 B1**
(45) Date de publication et mention de la délivrance du brevet: **30.08.2017**
(21) Numéro de dépôt: 15305742.7
(22) Date de dépôt: 18.05.2015
(51) Int. Cl.: A01D 34/00

(54) **PROCÉDÉ DE MISE EN OEUVRE D'UN ROBOT DE TRAITEMENT DU SOL ET SYSTÈME CORRESPONDANT**
VERFAHREN ZUR VERWENDUNG EINES ROBOTERS ZUR BODENBEHANDLUNG, UND ENTSPRECHENDES SYSTEM
METHOD FOR IMPLEMENTING A SOIL-TREATMENT ROBOT AND CORRESPONDING SYSTEM

(30) Priorité: 19.05.2014 FR 1454465
(43) Date de publication de la demande: 25.11.2015
(73) Titulaire: Outils Wolf (Société par Actions Simplifiée), 67160 Wissembourg (FR)
(72) Inventeur: Wolf, Pierre, 67160 ROTT (FR); Treger, Claude, 67250 HUNSPACH (FR); Delcasso, Laurent, 34130 Lansargues (FR)
(74) Mandataire: Nuss, Laurent

(56) Documents cités:
- EP-A1- 1 886 549
- WO-A1-2007/091967
- FR-A1- 2 687 808

## Description

La présente invention concerne le domaine des équipements grand public et professionnels pour le traitement automatisé du sol et de terrains, plus particulièrement pour la tonte de zones gazonnées ou herbacées, ou pour des opérations annexes en relation avec la maintenance de telles zones.

Dans ce contexte, l'invention a pour objet un procédé de mise en oeuvre d'un robot de traitement du sol, en particulier d'un robot tondeuse et un système permettant la réalisation de ce procédé.

Par robot de traitement du sol, on entend, dans la présente, un appareil mobile autonome apte à réaliser une opération ou un travail technique au niveau du sol, soit en surface (par exemple : nettoyage avec ou sans ramassage, lavage avec ou sans séchage consécutif, dépose de produit, tonte, ...), soit en engagement avec le sol ou le terrain (par exemple : scarification, binage, ...). En outre, des sols de différents types peuvent être concernés : pelouse, gazon, terrain herbacé ou non, cour bétonnée, pavée ou goudronnée, sol carrelé, terrasse, ... et déterminer ainsi le type d'opérations réalisables par un robot adapté. Typiquement, un tel robot comprend, en plus d'un ou de plusieurs moyens(s) d'actionnement, d'au moins une source d'énergie autonome, d'au moins un outil de travail, de moyens de déplacement et d'un carter de protection, également une unité de contrôle et de pilotage, un dispositif de détermination de sa position (absolue ou relative), des moyens de stockage et un module de transmission ou de communication, préférentiellement bidirectionnelle.

Actuellement, les zones de traitement, de travail ou de tonte du type précité sont généralement délimitées par des éléments matériels ou des moyens physiques apparents (bordures, murets, murs, barrières, câbles de délimitation, ...). En variante, et notamment pour les robots tondeuses, ces zones peuvent également être délimitées par des fils périmétriques enterrés.

La mise en place de ces types de moyens de délimitation connus entraîne des travaux spécifiques importants. Notamment l'installation des fils enterrés nécessite une intervention fastidieuse de la part de l'opérateur ou de l'utilisateur qui peut s'avérer délicate lorsque d'autres conduits ou câbles sont déjà présents dans le sol, et nécessite plusieurs heures, voire jours, de travail en fonction de la taille et de la complexité du terrain.

De plus, une éventuelle modification du périmètre de la zone de travail s'avère tout aussi fastidieuse et nécessite, en outre, une remise en état du sol ou du terrain (voir par exemple WO 2013/041278), ou au moins de la bordure périmétrique modifiée.

On connaît, par ailleurs, des robots tondeuses équipés d'un système de repérage satellitaire (GPS) utilisé pour repérer les parcelles à tondre et/ou faire déplacer le robot tondeuse d'une parcelle à une autre (US 2003/0236723 et US 2011/0125358).

Ce type de robot tondeuse peut utiliser, en outre, une carte digitale emmagasinée en combinaison avec le repérage satellitaire pour piloter la tonte (US 2011/0125358 et WO 2013/034345).

Néanmoins, du fait même de leur mode de réalisation, ces cartographies virtuelles manquent souvent de précision, ne tiennent pas compte des réalités concrètes du terrain et de la zone de travail et nécessitent généralement une remise à zéro en cas de modification de la zone de travail.

Par le document WO 2007/091967, on connaît un procédé de mise en oeuvre d'un robot de traitement du sol selon le préambule de la revendication 1, et un système pour le traitement robotisé d'une zone de travail selon le préambule de la revendication 13.

Néanmoins, dans cette réalisation connue, il est nécessaire, pour enregistrer le pourtour de la zone de travail à traiter, de déplacer le robot lui-même le long de ce pourtour, ce qui est fastidieux.

La présente invention a pour but de surmonter au moins certains des inconvénients précités en relation avec l'état de la technique évoqué relatif aux robots de traitement des sols, plus particulièrement les robots tondeuses, **et notamment rendre leur paramétrage plus aisé.**

A cet effet, l'invention a pour objet un procédé de mise en oeuvre d'un robot de traitement du sol, plus particulièrement d'un robot tondeuse ou robot de tonte, comprenant une unité de contrôle et de pilotage, un dispositif de positionnement absolu ou relatif, un moyen de stockage de données et un module de transmission,
procédé caractérisé en ce qu'il consiste, avant que ledit robot ne traite une nouvelle zone de travail ou une zone de travail modifiée, à relever au moyen d'un dispositif portatif adapté, équipé d'un module de géolocalisation absolue ou relative et/ou de prises d'images, compatible avec le dispositif de positionnement du robot, des informations de positionnement, déterminant une pluralité de positions ou de points le long du ou des pourtour(s) délimitant ladite zone de travail, à transférer ces informations au robot, éventuellement après correction en utilisant au moins un point fixe local, et à définir automatiquement une cartographie et/ou une stratégie de déplacement du robot pour la zone de travail délimitée virtuellement après intégration desdites informations.

L'invention a également pour objet un système de traitement robotisé mettant en oeuvre ce procédé.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 1 est une représentation schématique illustrant une possible réalisation du procédé selon l'invention, avec les principaux éléments constitutifs du système mis en oeuvre, pour une zone de travail (terrain à traiter) donnée ;
La figure 2 est une vue schématique en perspective d'un mode de réalisation du robot selon l'invention (sous forme de robot tondeuse avec son capot entrouvert) faisant partie du système selon l'invention ;
La figure 3 est une vue schématique en perspective et partiellement par transparence d'un dispositif portatif de relevé de coordonnées de géolocalisation faisant également partie du système selon un mode de réalisation avantageux de l'invention ;
Les figures 4 et 5 sont des schémas synoptiques respectivement du robot tondeuse de la figure 2 et du dispositif portatif de la figure 3, et,
La figure 6 est une représentation similaire à celle de la figure 1, illustrant des possibilités de subdivision d'une zone de travail et de création d'une nouvelle zone de travail séparée.

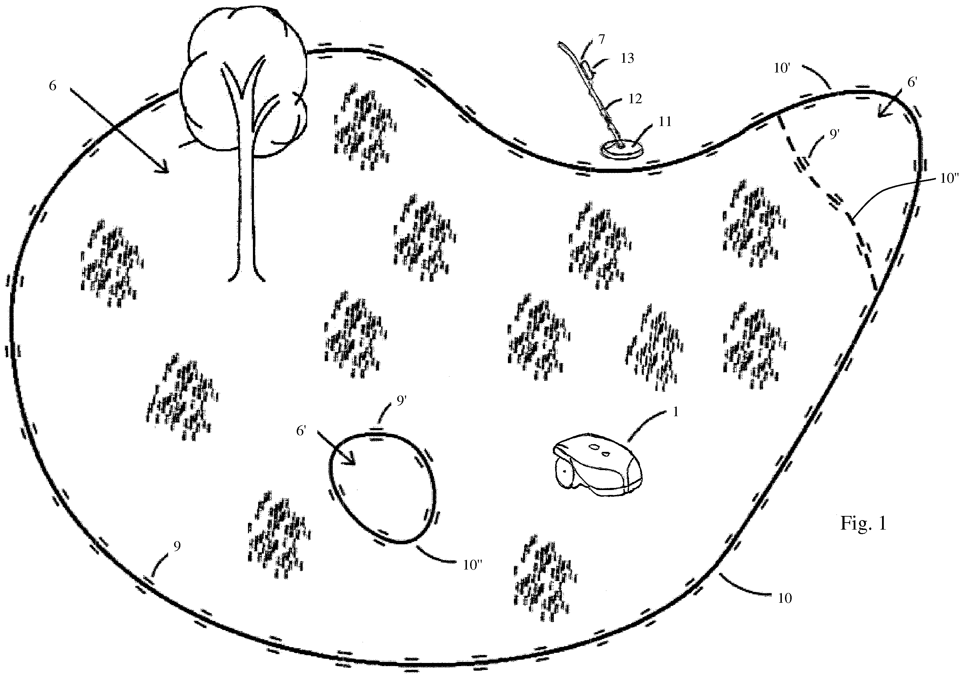

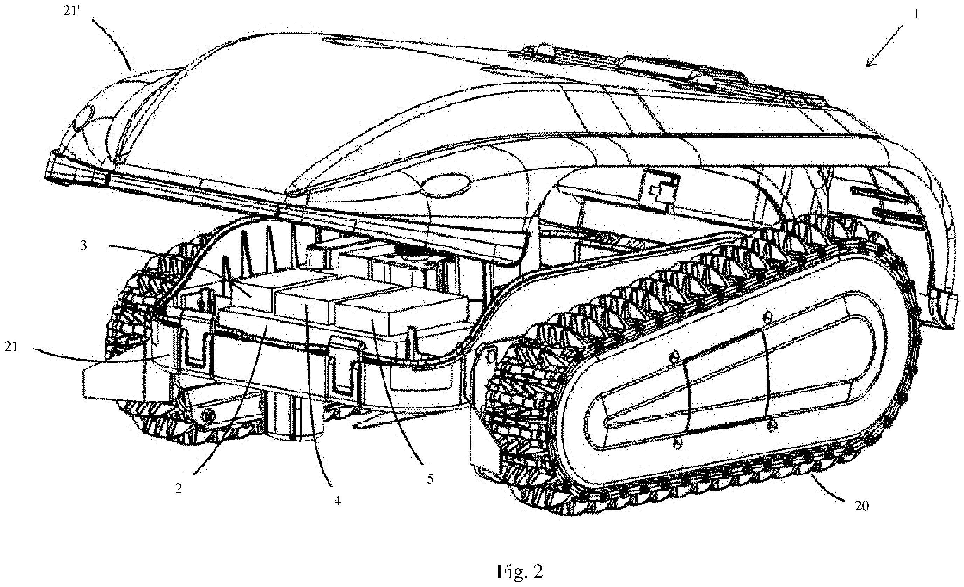

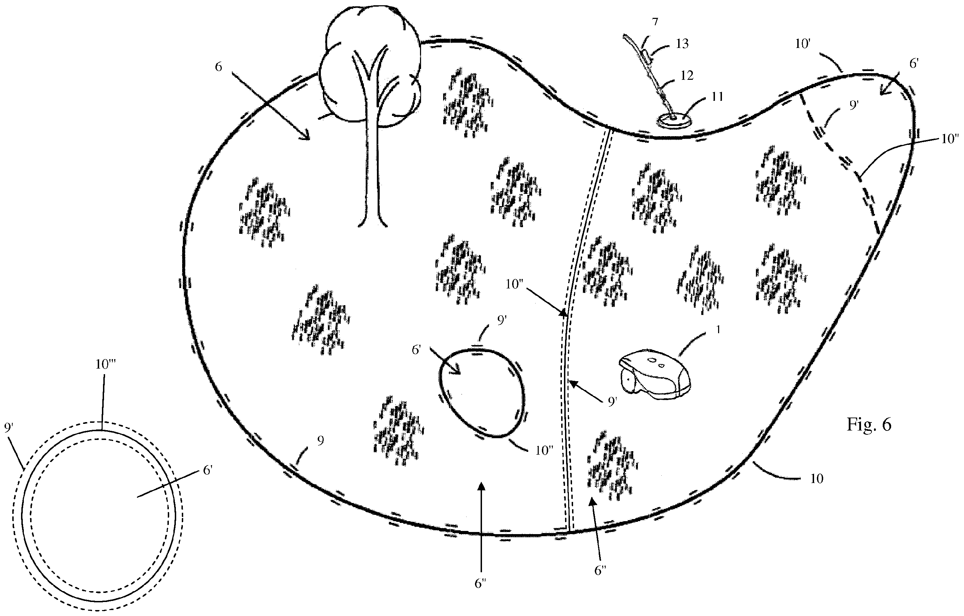

Les figures 1 et 6 des dessins annexés, en relation avec les figures 2 à 5, illustrent le procédé de mise en oeuvre d'un robot tondeuse de traitement 1, plus particulièrement, mais non limitativement, d'un robot tondeuse.

Un tel robot 1 comprend notamment, comme le montre la figure 2, une unité 2 de contrôle et de pilotage, un dispositif 3 de positionnement absolu ou relatif, un moyen 4 de stockage de données et un module de transmission 5.

Conformément à l'invention, le procédé de mise en oeuvre consiste essentiellement, avant que ledit robot 1 ne traite une nouvelle zone de travail ou une zone de travail modifiée 6, à relever au moyen d'un dispositif portatif 7 adapté, équipé d'un module 8 de géolocalisation absolue ou relative et/ou de prises d'images, compatible avec le dispositif 3 de positionnement du robot 1, des informations de positionnement, déterminant une pluralité de positions ou de points 9, 9' le long du ou des pourtour(s) 10, 10' délimitant ladite zone de travail 6, à transférer ces informations au robot 1, éventuellement après correction en utilisant au moins un point fixe local, et à définir automatiquement une cartographie et/ou une stratégie de déplacement du robot 1 pour la zone de travail 6 délimitée virtuellement après intégration desdites informations.

Ainsi, grâce à l'invention, il est possible de définir préalablement un fil périmétrique virtuel délimitant la zone de travail 6 pour le robot 1 dans son ou ses intervention(s) ultérieure(s).

L'homme du métier comprend aisément les avantages importants découlant des dispositions inventives précitées, à savoir une délimitation rapide, aisée et flexible, des zones à traiter, ne nécessitant aucun travail préparatoire au niveau du sol et permettant d'aboutir à une grande précision de tracé, en lien direct avec la topologie et la configuration réelle de la zone à traiter.

Selon une première caractéristique importante de l'invention, ressortant de la figure 1, le procédé peut, en outre, consister, en cas de modification partielle et/ou additionnelle d'une zone de travail 6, dont la délimitation virtuelle est enregistrée au niveau du robot 1, à relever au moyen du dispositif portatif 7 uniquement les informations de positionnement de nouvelles positions ou de nouveaux points 9' correspondant ou appartenant à la partie modifiée 10" de pourtour et/ou une partie additionnelle 10" de pourtour, et à rafraîchir la délimitation virtuelle enregistrée en transmettant au robot 1 uniquement ces nouvelles informations de positionnement. Le(s) pourtour(s) modifié(s) peuvent présenter par rapport au(x) pourtour(s) enregistré(s) soit au moins une partie de pourtour modifiée 10", contiguë à une partie non modifiée du pourtour enregistré, et étendant ou restreignant la zone de travail 6 correspondant au pourtour enregistré 10, 10', soit au moins un second ou autre pourtour 10" fermé et indépendant du pourtour enregistré 10, 10', et délimitant au moins une zone d'exclusion 6' dans la zone de travail 6 définie périphériquement, et éventuellement intérieurement, par le(s)dit(s) pourtour(s) 10, 10' enregistré(s).

De ce fait, non seulement l'utilisateur peut limiter son relevage d'informations de positionnement (points de géolocalisation 9, 9' ou images de l'environnement) aux seuls nouveaux points 9' ou nouvelles prises de vues correspondant à la partie 10", mais les opérations consécutives peuvent également se limiter à un rafraîchissement seulement partiel des données de géolocalisation ou images de référence déjà stockées au niveau du robot 1, d'où il résulte un traitement et une transmission limités.

Sur la figure 1, les tracés des deux parties de pourtour 10", sous forme de modification et d'ajout respectivement, sont représentés en trait pointillé. Il en est de même de la frontière entre zones élémentaires 6" subdivisant une zone de travail 6 et du pourtour 10"' de la nouvelle zone indépendante 6, illustrés sur la figure 6.

Il convient de noter que la zone d'exclusion 6' interne à une zone de travail 6, peut soit constituer une zone d'absence de traitement, soit être traitée par le robot 1 en appliquant des paramètres, des caractéristiques, des fréquences et/ou des conditions de traitement différents de ceux appliqués pour le traitement du reste de la zone de travail 6.

Selon un premier mode de réalisation de l'invention, les informations de positionnement, relevées par l'intermédiaire du dispositif portatif 7 et transmises au robot 1 pour y être enregistrées, consistent en des prises de vue effectuées depuis des positions le long du ou des pourtour(s) 10, 10' délimitant la zone de travail 6, l'unité 2 de contrôle et de pilotage du robot 1 comparant en permanence, lors du traitement de la zone de travail 6 considérée, les images fournies par un système de vision équipant ledit robot 1 avec ces prises de vue enregistrées, afin de déterminer la position relative dudit robot 1 par rapport au(x) pourtour(s) 10, 10'

Dans ce cas, le robot 1 détermine sa position relative par rapport au pourtour par comparaison des images fournies en continu par un système de vision embarqué avec celles qui lui ont été transmises par le dispositif portatif 7 et enregistrées dans son moyen de stockage 4 (images de référence).

Selon un second mode de réalisation de l'invention, les informations de positionnement consistent en des coordonnées de points discrets 9, 9' faisant partie du ou des pourtour(s) 10, 10', le robot 1 étant équipé d'un dispositif 3 de géolocalisation absolue ou relative compatible avec le module 8 de géolocalisation du dispositif portatif 7, et exploitant les coordonnées des points 9, 9' relevées et transmises préalablement par ce dernier en vue de la détermination de la position dudit robot 1 par rapport au(x) pourtour(s) 10, 10'.

En relation avec ce second mode de réalisation de l'invention et afin de disposer d'une bonne continuité au niveau du tracé du ou des pourtour(s) 10, 10', en accord avec la précision fournie par le système global de géolocalisation ou de positionnement associé au dispositif 3 du robot 1 et au module 8 du dispositif portatif 7, il peut être prévu de réaliser, à partir des coordonnées des points 9, 9' répartis le long du nouveau pourtour 10, 10' ou de la partie de pourtour additionnelle et/ou modifiée 10, 10', au niveau de l'unité 2 de contrôle et de pilotage, une extrapolation entre points 9, 9' voisins de manière à aboutir à la définition d'un tracé de pourtour sensiblement continu, en particulier en regard de la résolution du dispositif de géolocalisation 3 du robot 1 et du système global de géolocalisation correspondant.

Conformément à une autre caractéristique de l'invention, l'unité 2 du robot 1 ou l'unité 14 du dispositif portatif 7, peut réaliser, en cas de modification d'un pourtour 10, 10' de zone de travail 6 déjà enregistré, un raccord entre la ou les partie(s) inchangée(s) du pourtour 10, 10' et la ou les partie(s) de pourtour modifiée(s) 10", avec notamment à chaque fois une détermination des positions limitrophes ou des derniers points extrémaux 9 de la partie inchangée du pourtour enregistré 10, 10', assurant le raccord avec les nouveaux points ou les nouvelles positions 9' correspondant à la partie de pourtour ajoutée et/ou modifiée.

En relation avec une variante pratique de l'invention, liée au premier mode de réalisation précité, le relevage de prises de vue au niveau d'un nouveau pourtour 10, 10' ou d'une partie 10" additionnelle ou modifiée d'un pourtour enregistré consiste à déplacer le dispositif portatif 7 pourvu du module 8 de prise de vues, le long du pourtour 10, 10' ou de la partie de pourtour 10" à relever, à effectuer successivement, continûment ou préférentiellement à intervalles réguliers, automatiquement ou sur commande de l'utilisateur, des prises de vue pendant ledit déplacement, et, en fin de parcours, à transmettre les images acquises, éventuellement après prétraitement, au robot 1.

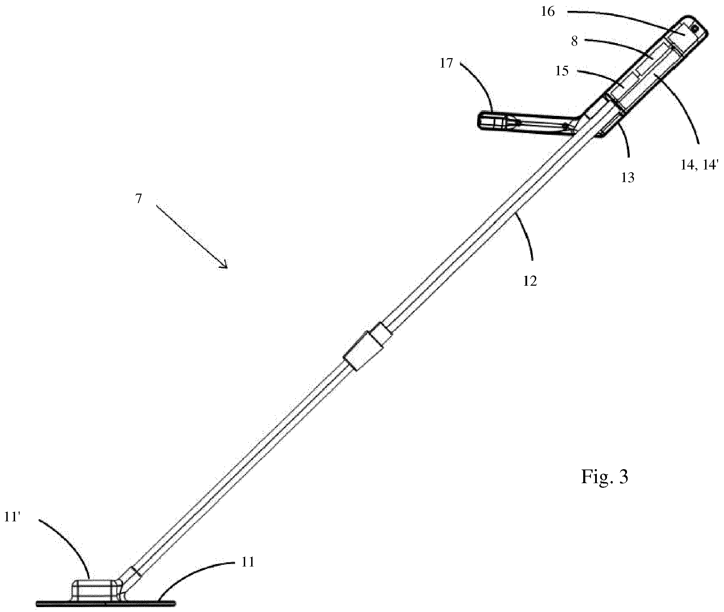

En accord avec une autre variante pratique de l'invention et en relation avec le second mode de réalisation précité, ressortant des figures 1 et 3 notamment, le relevage des coordonnées des points 9, 9', répartis le long d'un nouveau pourtour 10, 10' ou d'une partie 10" additionnelle ou modifiée d'un pourtour enregistré, consiste à déplacer une tête de pointage 11 équipée d'une antenne 11' de géolocalisation et préférentiellement montée au niveau de l'extrémité inférieure d'un manche 12 du dispositif portatif 7, sous forme d'un outil manuel à manche, le long du pourtour 10, 10' ou de la partie de pourtour 10" à relever, à saisir successivement, et préférentiellement à intervalles réguliers, automatiquement ou sur commande de l'opérateur, des coordonnées de points consécutifs 9, 9' balisant ledit pourtour 10, 10' ou ladite partie de pourtour 10" et, en fin de parcours, et éventuellement après prétraitement, à transmettre les données de géolocalisation correspondantes au robot 1.

Afin d'aboutir à une similarité totale de positionnement entre la phase préliminaire de définition du ou des pourtour(s) 10, 10' par l'intermédiaire de l'outil portatif 7 et la phase ultérieure d'exploitation de ce(s) dernier(s) par le robot tondeuse 1, il est avantageusement prévu que le relevage des coordonnées des points 9, 9' ou la prise des images balisant le pourtour 10, 10' ou la partie de pourtour 10" considérée est réalisé dans des conditions similaires à celles rencontrées pour le dispositif 3 de positionnement du robot 1 lors du traitement de la zone de travail 6 délimitée correspondante, et avec des moyens et sous des formes compatibles.

Ainsi, il peut être envisagé de prendre en compte le positionnement de l'antenne de géolocalisation 11' dans la tête de pointage 11 de l'outil portatif 7, ainsi que l'encombrement latéral de cette dernière, ou encore le positionnement de l'objectif du dispositif 8 de prise de vues.

Une telle disposition permet notamment d'ajuster avec précision la position des moyens de roulement (roues ou chenilles 20) et/ou de l'organe de traitement ou coupe aux limites de la zone de travail 6, de manière à éviter notamment tout débordement au-delà de la zone de travail 6 ou toute partie de zone de travail 6 laissée pour compte (non traitée).

En plus des zones d'exclusion, conditionnelle et/ou à traitement spécifique internes à une zone de travail existante ou déterminée, d'autres applications concrètes de l'invention peuvent être envisagées.

Ainsi, le procédé peut consister, dans le cadre d'une modification de la zone de travail à traiter par le robot 1, à délimiter au moins une zone de travail additionnelle 6' extérieure à et séparée d'une zone de travail 6 existante, en réalisant par l'intermédiaire du dispositif portatif 7 une prise en compte de nouvelles positions et/ou de nouveaux points 9' définissant conjointement au moins un nouveau pourtour 10"' qui détermine ladite au moins une zone de travail 6' additionnelle, le robot 1 étant apte à se déplacer entre les différentes zones de travail 6, 6' (voir figure 6).

D'autre part, le procédé peut également consister, dans le cadre d'une modification ou adaptation de la zone de travail 6 à traiter par le robot 1, à subdiviser ladite zone de travail existante ou nouvelle zone de travail 6 en au moins deux zones élémentaires 6" complémentaires dont chacune est traitée par le robot 1 en appliquant des paramètres, des caractéristiques, des fréquences et/ou des conditions de traitement différents de ceux appliqués pour le traitement du reste de la zone de travail 6, les zones élémentaires 6" adjacentes étant séparées par des lignes de bordure ou des frontières 10" déterminées par l'intermédiaire du dispositif portatif 7 par une prise en compte de nouvelles positions et/ou de nouveaux points 9' (voir figure 6).

Dans le cadre d'un robot 1 du type robot de tonte, les paramètres, caractéristiques et conditions précitées peuvent comprendre la hauteur de coupe, le motif de coupe, la réalisation d'un déchiquetage après coupe ou analogue.

Bien entendu, comme indiqué précédemment, la stratégie de déplacement et les modalités de traitement sont adaptés en fonction des changements intervenus ou de la programmation correspondante du robot, ainsi que des informations transmises par le dispositif 7.

L'invention a également pour objet, comme illustré aux figures 1 à 6, un système pour le traitement robotisé d'une zone de travail 6, apte et destiné à mettre en oeuvre le procédé tel que décrit précédemment.

Ce système comprend au moins un robot 1 de traitement du sol comportant notamment une unité 2 de contrôle et de pilotage, un dispositif 3 de positionnement absolu ou relatif, un moyen 4 de stockage de données et un module 5 de transmission, apte à échanger des données par le biais d'une liaison filaire ou sans fil.

Ce système est caractérisé en ce qu'il comprend également au moins un dispositif portatif 7, équipé d'un module 8 de géolocalisation absolue ou relative et/ou de prises d'images, compatible avec celui du robot 1, ce dispositif portatif 7 étant apte et destiné à relever des informations de positionnement, déterminant une pluralité de positions ou de points 9, 9' le long d'un ou de plusieurs pourtour(s) 10, 10', 10" délimitant ladite zone de travail 6 et à transférer ces informations au robot 1, et en ce que l'unité de contrôle et de pilotage 2 du robot 1 est apte et destiné à définir automatiquement une cartographie et/ou une stratégie de déplacement du robot 1 pour la zone de travail 6 délimitée virtuellement après intégration desdites informations.

Comme indiqué précédemment, le robot 1 est préférentiellement un robot tondeuse 1 et les informations de positionnement consistent soit en des prises de vue depuis des positions le long du pourtour, soit en des coordonnées de géolocalisation de points faisant partie de ce pourtour.

Le système de géolocalisation utilisé par le robot 1 et par le dispositif portatif 7 dans le cadre du second mode de réalisation peut consister en un système de géolocalisation ou de positionnement global de nature absolue (par exemple du type GPS, GALILEO®, ou analogue), de nature relative (du type balise au sol, système optique, ou analogue) ou encore de nature absolue avec correction au moyen d'un ou de plusieurs point(s) fixe(s) (par exemple du type GPRS, DGPS, ou analogue).

Le système de vision et de détermination de la position par comparaison de prises de vue (images de référence enregistrées et image courante) équipant le robot 1 peut correspondre à un des systèmes existants connus.

En outre, la communication entre le dispositif portatif 7 et le robot 1, ainsi que la transmission des données entre eux, peut s'effectuer par l'intermédiaire d'une connexion filaire ou préférentiellement d'une transmission sans fil et à distance, telle qu'une transmission radio, Bluetooth®, Wi-Fi®, infrarouge, ou analogue.

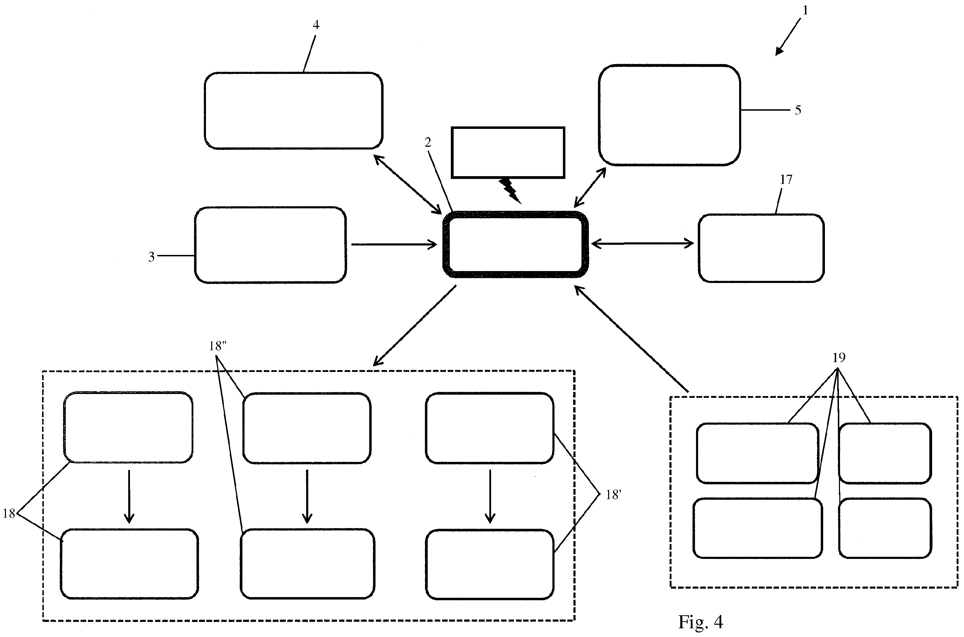

En plus des moyens 2 à 5 précités, le robot 1 comprend également une batterie rechargeable, des ensembles [circuit de puissance / moteur] 18, 18' et 18" pour l'entraînement du moyen de roulement gauche, du moyen de roulement droit et de la lame de coupe rotative respectivement et différents capteurs et détecteurs 19 tels qu'un capteur de soulèvement de capot 21', un capteur de choc, un détecteur de renversement et un détecteur de pluie (voir figure 4).

L'ensemble des composants fonctionnels et circuits constituant les organes opérationnels du robot 1 est installé dans un carter 21 muni d'un capot d'accès 21' et monté sur des moyens de roulement motorisés 20 sous la forme de roues ou préférentiellement de chenilles (voir figure 2).

Comme le montrent les figures 1 et 3, et selon un mode de réalisation avantageux de l'invention, le dispositif portatif 7 se présente sous la forme d'un outil avec un manche 12, préférentiellement à longueur réglable, utilisable en position debout par un opérateur, et comprenant, d'une part, à son extrémité inférieure, une tête de pointage 11 équipée d'une antenne de géolocalisation 11' et/ou un module de prise d'images et, d'autre part, au niveau de son extrémité supérieure, un ensemble de moyens opérationnels 8, 14, 14', 15 pour l'acquisition et la transmission d'informations de positionnement, telles que des images et/ou des coordonnées de positions ou de points géographiques 9, 9', au niveau desquels la tête de pointage 11 ou le module de prise d'images est successivement positionnée, préférentiellement sensiblement au ras du sol.

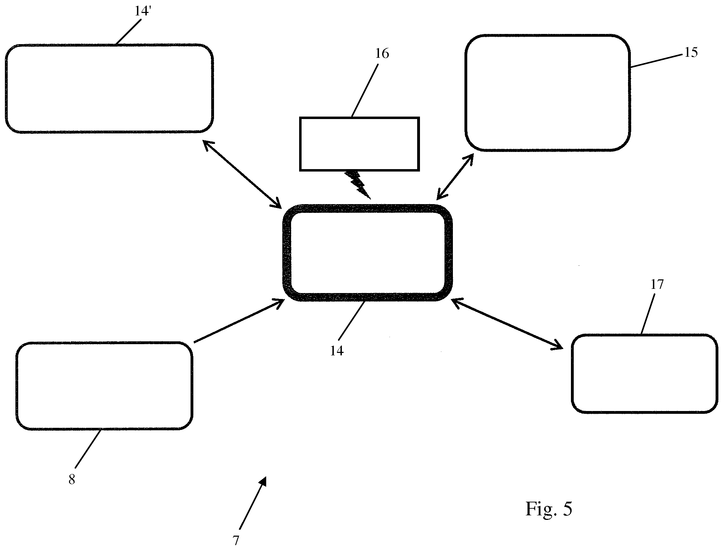

En accord avec une variante d'exécution pratique possible illustrée à la figure 5, l'ensemble de moyens opérationnels du dispositif portatif 7 comprend notamment, installé dans un boîtier de protection 13, un module 14 de traitement et de gestion, auquel est associée une mémoire de stockage 14', un module 8 d'acquisition et éventuellement de traitement des images et/ou des coordonnées de géolocalisation absolues ou relatives, un module 15 de transmission bidirectionnel pour la communication avec le robot 1 et une source d'alimentation autonome 16 rechargeable, ledit outil à manche 7 formant dispositif portatif de géolocalisation de points géographiques 9, 9' et/ou de prise de vues comprenant, en outre, une interface 17 de communication avec l'opérateur, avec par exemple un écran de visualisation et des moyens de commande et/ou d'entrée de données.

L'outil portatif 7 peut éventuellement être pourvu d'une sangle ou d'un harnais de portage (non représenté) et est préférentiellement équilibré en poids entre la tête de pointage 11 et le boîtier 13 opposé, renfermant les différents moyens opérationnels 8, 14, 14', 15 et 16 (voir figure 3).

Un même outil portatif 7 peut, le cas échéant, servir à la programmation d'une pluralité de robots 1, chacun de ces derniers présentant éventuellement une fréquence ou un protocole de communication particulier.

Le dispositif portatif 7 peut éventuellement aussi se présenter sous la forme d'un terminal de communication mobile telle qu'une tablette ou un téléphone mobile intelligent ("smartphone") fonctionnant avec une application de géolocalisation adaptée.

## Revendications

1. Procédé de mise en oeuvre d'un robot de traitement du sol, plus particulièrement d'un robot tondeuse ou robot de tonte, comprenant une unité de contrôle et de pilotage, un dispositif de positionnement absolu ou relatif, un moyen de stockage de données et un module de transmission,
procédé **caractérisé en ce qu'**il consiste, avant que ledit robot (1) ne traite une nouvelle zone de travail ou une zone de travail modifiée (6), à relever au moyen d'un dispositif portatif (7) adapté, équipé d'un module (8) de géolocalisation absolue ou relative et/ou de prises d'images, compatible avec le dispositif (3) de positionnement du robot (1), des informations de positionnement, déterminant une pluralité de positions ou de points (9, 9') le long du ou des pourtour(s) (10, 10') délimitant ladite zone de travail (6), à transférer ces informations au robot (1), éventuellement après correction en utilisant au moins un point fixe local, et à définir automatiquement une cartographie et/ou une stratégie de déplacement du robot (1) pour la zone de travail (6) délimitée virtuellement après intégration desdites informations.

2. Procédé selon la revendication 1, **caractérisé en ce qu'**il consiste, en cas de modification partielle et/ou additionnelle d'une zone de travail (6), dont la délimitation virtuelle est enregistrée au niveau du robot (1), à relever au moyen du dispositif portatif (7) uniquement les informations de positionnement de nouvelles positions ou de nouveaux points (9') correspondant ou appartenant à la partie modifiée (10") de pourtour et/ou à une partie additionnelle (10") de pourtour, et à rafraîchir la délimitation virtuelle enregistrée en transmettant au robot (1) uniquement ces nouvelles informations de positionnement, le(s) pourtour(s) modifié(s) présentant par rapport au(x) pourtour(s) enregistré(s) soit au moins une partie de pourtour modifiée (10"), contiguë à une partie non modifiée du pourtour enregistré, et étendant ou restreignant la zone de travail (6) correspondant au pourtour enregistré (10, 10'), soit au moins un second ou autre pourtour (10") fermé et indépendant du pourtour enregistré (10, 10'), et délimitant au moins une zone d'exclusion (6') dans la zone de travail (6) définie périphériquement, et éventuellement intérieurement, par le(s)dit(s) pourtour(s) (10, 10') enregistré(s).

3. Procédé selon l'une quelconque des revendications 1 et 2, **caractérisé en ce que** les informations de positionnement, relevées par l'intermédiaire du dispositif portatif (7) et transmises au robot (1) pour y être enregistrées, consistent en des prises de vue effectuées depuis des positions le long du ou des pourtour(s) (10, 10') délimitant la zone de travail (6), l'unité (2) de contrôle et de pilotage du robot (1) comparant en permanence, lors du traitement de la zone de travail (6) considérée, les images fournies par un système de vision équipant ledit robot (1) avec ces prises de vue enregistrées, afin de déterminer la position relative dudit robot (1) par rapport au(x) pourtour(s) (10, 10').

4. Procédé selon l'une quelconque des revendications 1 et 2, **caractérisé en ce que** les informations de positionnement consistent en des coordonnées de points discrets (9, 9') faisant partie du ou des pourtour(s) (10, 10'), le robot (1) étant équipé d'un dispositif (3) de géolocalisation absolue ou relative compatible avec le module (8) de géolocalisation du dispositif portatif (7), et exploitant les coordonnées des points (9, 9') relevées et transmises préalablement par ce dernier en vue de la détermination de la position dudit robot (1) par rapport au(x) pourtour(s) (10, 10').

5. Procédé selon l'une quelconque des revendications 1, 2 et 4, **caractérisé en ce qu'**il consiste, à partir des coordonnées des points (9, 9') répartis le long du nouveau pourtour (10, 10') ou de la partie de pourtour additionnelle et/ou modifiée (10, 10'), à réaliser, au niveau de l'unité (2) de contrôle et de pilotage, une extrapolation entre points (9, 9') voisins de manière à aboutir à la définition d'un tracé de pourtour sensiblement continu, en particulier en regard de la résolution du dispositif de géolocalisation (3) du robot (1) et du système global de géolocalisation correspondant.

6. Procédé selon l'une quelconque des revendications 1 à 5, **caractérisé en ce qu'**il consiste, en cas de modification d'un pourtour (10, 10') de zone de travail (6) déjà enregistré, à réaliser un raccord entre la ou les partie(s) inchangée(s) du pourtour (10, 10') et la ou les partie(s) de pourtour modifiée(s) (10"), avec notamment à chaque fois une détermination des positions limitrophes ou des derniers points extrémaux (9) de la partie inchangée du pourtour enregistré (10, 10'), assurant le raccord avec les nouveaux points ou les nouvelles positions (9') correspondant à la partie de pourtour ajoutée et/ou modifiée.

7. Procédé selon l'une quelconque des revendications 1, 2 et 4 à 6, **caractérisé en ce que** le relevage des coordonnées des points (9, 9') répartis le long d'un nouveau pourtour (10, 10') ou d'une partie (10") additionnelle ou modifiée d'un pourtour enregistré consiste à déplacer une tête de pointage (11) équipée d'une antenne (11') de géolocalisation et préférentiellement montée au niveau de l'extrémité inférieure d'un manche (12) du dispositif portatif (7), sous forme d'un outil manuel à manche, le long du pourtour (10, 10') ou de la partie de pourtour (10") à relever, à saisir successivement, et préférentiellement à intervalles réguliers, automatiquement ou sur commande de l'opérateur, des coordonnées de points consécutifs (9, 9') balisant ledit pourtour (10, 10') ou ladite partie de pourtour (10") et, en fin de parcours, et éventuellement après prétraitement, à transmettre les données de géolocalisation correspondantes au robot (1).

8. Procédé selon l'une quelconque des revendications 1 à 3 et 6, **caractérisé en ce que** le relevage de prises de vue au niveau d'un nouveau pourtour (10, 10') ou d'une partie (10") additionnelle ou modifiée d'un pourtour enregistré consiste à déplacer le dispositif portatif (7) pourvu du module (8) de prise de vues, le long du pourtour (10, 10') ou de la partie de pourtour (10") à relever, à effectuer successivement, continûment ou préférentiellement à intervalles réguliers, automatiquement ou sur commande de l'utilisateur, des prises de vue pendant ledit déplacement, et, en fin de parcours, à transmettre les images acquises, éventuellement après prétraitement, au robot (1).

9. Procédé selon l'une quelconque des revendications 1 à 5, **caractérisé en ce que** le relevage des coordonnées des points (9, 9') ou la prise de vue des images balisant le pourtour (10, 10') ou la partie de pourtour (10") considérée est réalisé dans des conditions similaires à celles rencontrées pour le dispositif (3) de positionnement du robot (1) lors du traitement de la zone de travail (6) délimitée correspondante.

10. Procédé selon la revendication 2, **caractérisé en ce que** la zone d'exclusion (6') interne à une zone de travail (6) est traitée par le robot (1) en appliquant des paramètres, des caractéristiques, des fréquences et/ou des conditions de traitement différents de ceux appliqués pour le traitement du reste de la zone de travail (6).

11. Procédé selon l'une quelconque des revendications 1 à 10, **caractérisé en ce qu'**il consiste, dans le cadre d'une modification de la zone de travail à traiter par le robot (1), à délimiter au moins une zone de travail additionnelle (6') extérieure à et séparée d'une zone de travail (6) existante, en réalisant par l'intermédiaire du dispositif portatif (7) une prise en compte de nouvelles positions et/ou de nouveaux points (9') définissant conjointement au moins un nouveau pourtour (10"') qui détermine ladite au moins une zone de travail (6') additionnelle, le robot (1) étant apte à se déplacer entre les différentes zones de travail (6, 6').

12. Procédé selon l'une quelconque des revendications 1 à 11, **caractérisé en ce qu'**il consiste, dans le cadre d'une modification ou adaptation de la zone de travail (6) à traiter par le robot (1), à subdiviser la zone de travail existante ou nouvelle zone de travail (6) en au moins deux zones élémentaires (6") complémentaires dont chacune est traitée par le robot (1) en appliquant des paramètres, des caractéristiques, des fréquences et/ou des conditions de traitement différents de ceux appliqués pour le traitement du reste de la zone de travail (6), les zones élémentaires (6") adjacentes étant séparées par des lignes de bordure ou des frontières (10") déterminées par l'intermédiaire du dispositif portatif (7) par une prise en compte de nouvelles positions et/ou de nouveaux points (9').

13. Système pour le traitement robotisé d'une zone de travail, apte et destiné à mettre en oeuvre le procédé selon l'une quelconque des revendications 1 à 12, ledit système comprenant au moins un robot de traitement du sol comportant une unité de contrôle et de pilotage, un dispositif de positionnement absolu ou relatif, un moyen de stockage de données et un module de transmission,
système **caractérisé en ce qu'**il comprend également au moins un dispositif portatif (7), équipé d'un module (8) de géolocalisation absolue ou relative et/ou de prises d'images, compatible avec celui du robot (1), ce dispositif portatif (7) étant apte et destiné à relever des informations de positionnement, déterminant une pluralité de positions ou de points (9, 9') le long d'un ou de plusieurs pourtour(s) (10, 10', 10") délimitant ladite zone de travail (6) et à transférer ces informations au robot (1), et **en ce que** l'unité de contrôle et de pilotage (2) du robot (1) est apte et destiné à définir automatiquement une cartographie et/ou une stratégie de déplacement du robot (1) pour la zone de travail (6) délimitée virtuellement après intégration desdites informations.

14. Système selon la revendication 13, **caractérisé en ce que** le dispositif portatif (7) se présente sous la forme d'un outil avec un manche (12), préférentiellement à longueur réglable, utilisable en position debout par un opérateur, et comprenant, d'une part, à son extrémité inférieure, une tête de pointage (11) équipée d'une antenne de géolocalisation (11') et/ou un module de prise d'images et, d'autre part, au niveau de son extrémité supérieure, un ensemble de moyens opérationnels (8, 14, 14', 15) pour l'acquisition et la transmission d'informations de positionnement, telles que des images et/ou des coordonnées de positions ou de points géographiques (9, 9'), au niveau desquels la tête de pointage (11) ou le module de prise d'images est successivement positionnée, préférentiellement sensiblement au ras du sol.

15. Système selon l'une quelconque des revendications 13 et 14, **caractérisé en ce que** l'ensemble de moyens opérationnels du dispositif portatif (7) comprend notamment, installé dans un boîtier de protection (13), un module (14) de traitement et de gestion, auquel est associée une mémoire de stockage (14'), un module (8) d'acquisition et éventuellement de traitement des images et/ou des coordonnées de géolocalisation absolues ou relatives, un module (15) de transmission bidirectionnel pour la communication avec le robot (1) et une source d'alimentation autonome (16) rechargeable, ledit outil à manche (7) formant dispositif portatif de géolocalisation de points géographiques (9, 9') et/ou de prise de vues comprenant, en outre, une interface (17) de communication avec l'opérateur, avec par exemple un écran de visualisation et des moyens de commande et/ou d'entrée de données.

## Patentansprüche

1. Verfahren zum Betrieb eines Bodenbearbeitungsroboters, insbesondere eines Mähroboters, umfassend eine Kontroll- und Steuereinheit, eine Vorrichtung zur absoluten oder relativen Positionsbestimmung, ein Datenspeicherungsmittel und ein Übertragungsmodul,
Verfahren, **dadurch gekennzeichnet, dass** es darin besteht, bevor der genannte Roboter (1) einen neuen Arbeitsbereich oder einen geänderten Arbeitsbereich (6) bearbeitet, mit Hilfe einer dafür ausgelegten tragbaren Vorrichtung (7), die mit einem Modul (8) zur absoluten oder relativen Geolokalisation und/oder zur Aufnahme von Bildern versehen ist, die mit der Positionsbestimmungsvorrichtung (3) des Roboters (1) kompatibel ist, Positionsinformationen aufzunehmen, die mehrere Positionen oder Punkte (9, 9') entlang der Umrandung(en) (10, 10'), die den genannten Arbeitsbereich (6) umgrenzen, festlegen, diese Daten dem Roboter (1) zu übermitteln, gegebenenfalls nach Korrektur unter Verwendung mindestens eines festen örtlichen Punktes, und automatisch eine Kartographie und/oder eine Strategie der Bewegungen des Roboters (1) für den nach Einsetzen der genannten Daten virtuell umgrenzten Arbeitsbereich (6) zu definieren.

2. Verfahren nach Patentanspruch 1, **dadurch gekennzeichnet, dass** es darin besteht, im Fall einer teilweisen und/oder zusätzlichen Änderung eines Arbeitsbereiches (6), dessen virtuelle Umgrenzung im Roboter (1) gespeichert ist, mit Hilfe der tragbaren Vorrichtung (7) lediglich die Positionsinformationen neuer Positionen oder neuer Punkte (9'), die dem geänderten Umrandungsteil (10") und/oder einem zusätzlichen Umrandungsteil (10") entsprechen oder angehören, aufzunehmen, und die gespeicherte virtuelle Umrandung zu aktualisieren, indem dem Roboter (1) lediglich diese neuen Positionsinformationen übermittelt werden, wobei die geänderte(n) Umrandung(en) gegenüber der/den gespeicherten Umrandung(en) entweder mindestens einen geänderten Umrandungsteil (10") anschließend an einen nicht geänderten Teil der gespeicherten Umrandung aufweist/en und den der gespeicherten Umrandung (10, 10') entsprechenden Arbeitsbereich (6) erweitern oder einschränken, oder mindestens eine zweite oder andere Umrandung (10"), geschlossen und unabhängig von der gespeicherten Umrandung (10, 10'), und mindestens einen Ausschlussbereich (6') im durch die genannte(n) gespeicherte(n) Umrandung(en) peripher und gegebenenfalls im Inneren umgrenzten Arbeitsbereich (6) begrenzend.

3. Verfahren nach irgendeinem der Patentansprüche 1 und 2, **dadurch gekennzeichnet, dass** die Positionsbestimmungsinformationen, die mit Hilfe der tragbaren Vorrichtung (7) aufgenommen und dem Roboter (1) zur Speicherung übermittelt wurden, in Ansichten bestehen, die von Positionen längs der Umrandung(en) (10, 10'), die den Arbeitsbereich (6) umgrenzen, aufgenommen wurden, wobei die Kontroll- und Steuereinheit (2) des Roboters (1) laufend während der Bearbeitung des betrachteten Arbeitsbereichs (6) die Bilder, die von einem Sehsystem, mit dem der Roboter (1) ausgestattet ist, mit diesen gespeicherten Ansichten vergleicht, um die Position des genannten Roboters (1) relativ zur/zu den Umrandung(en) (10, 10') zu bestimmen.

4. Verfahren nach irgendeinem der Patentansprüche 1 und 2, **dadurch gekennzeichnet, dass** die Positionsbestimmungsinformationen in Koordinaten diskreter Punkte (9, 9') bestehen, die Teil der Umrandung(en) (10, 10') sind, wobei der Roboter (1) mit einem mit dem Modul zur Geolokalisation (8) der tragbaren Vorrichtung (7) kompatiblen Modul zur absoluten oder relativen Geolokalisation (8) versehen ist und die Koordinaten der Punkte (9, 9') verwendet, die vorab von der tragbaren Vorrichtung zur Festlegung der Position des genannten Roboters (1) relativ zur/zu den Umrandung(en) (10, 10') aufgenommen und übertragen wurden.

5. Verfahren nach irgendeinem der Patentansprüche 1, 2 und 4, **dadurch gekennzeichnet, dass** es darin besteht, aus den Koordinaten der über die neue Umrandung (10, 10') oder den zusätzlichen und/oder geänderten Teil der Umrandung (10, 10') verteilten Punkte (9, 9') in der Kontroll- und Steuereinheit (2) eine Extrapolation zwischen benachbarten Punkten (9, 9') derart vorzunehmen, dass die Festlegung einer im Wesentlichen durchgehenden Umrandung erzielt wird, insbesondere in Hinsicht auf die Auflösung der Geolokalisationsvorrichtung (3) des Roboters (1) und des entsprechenden globalen Geolokalisationssystems.

6. Verfahren nach irgendeinem der Patentansprüche 1 bis 5, **dadurch gekennzeichnet, dass** es darin besteht, im Fall der Änderung einer bereits gespeicherten Umrandung (10, 10') eines Arbeitsbereichs (6) ein Anschließen des oder der unveränderten Teils/e der Umrandung (10, 10') an den oder die geänderten Umrandungsteil(e) (10") vorzunehmen, jeweils mit insbesondere einer Bestimmung der angrenzenden Positionen oder der letzten Extrempunkte (9) des ungeänderten Teils der gespeicherten Umrandung (10, 10'), die den Anschluss an die neuen Punkte oder die neuen Positionen (9'), die dem zugefügten und/oder geänderten Teil der Umrandung entsprechen, sicherstellt.

7. Verfahren nach irgendeinem der Patentansprüche 1, 2 und 4 bis 6, **dadurch gekennzeichnet, dass** die Aufnahme der Koordinaten der Punkte (9, 9'), die über eine neue Umrandung (10, 10') oder über einen zusätzlichen oder geänderten Umrandungsteil (10") einer gespeicherten Umrandung verteilt sind, darin besteht, einen Ortungskopf (11), der mit einer Geolokalisationsantenne versehen und vorzugsweise an einem unteren Ende eines Griffes (12) der tragbaren Vorrichtung (7) in Form eines Handwerkzeugs mit Griff montiert ist, längs der aufzunehmenden Umrandung (10, 10') oder des aufzunehmenden Umrandungsteils (10") zu versetzen, nacheinander und vorzugsweise in regelmäßigen Abständen automatisch oder auf Veranlassung durch den Bediener Koordinaten aufeinanderfolgender Punkte (9, 9') zu erfassen und dabei die genannte Umrandung (10, 10') oder den genannten Umrandungsteil (10") zu durchlaufen und am Ende des Durchgangs und gegebenenfalls nach Vorverarbeitung die entsprechenden Geolokalisationsdaten dem Roboter (1) zu übermitteln.

8. Verfahren nach irgendeinem der Patentansprüche 1 bis 3 und 6, **dadurch gekennzeichnet, dass** die Aufnahme der Ansichten einer neuen Umrandung (10, 10') oder eines zusätzlichen oder geänderten Umrandungsteils (10") einer gespeicherten Umrandung darin besteht, die mit dem Aufnahmemodul (8) versehene tragbare Vorrichtung (7) längs der aufzunehmenden Umrandung (10, 10') oder des aufzunehmenden Umrandungsteils (10") zu versetzen, nacheinander laufend oder vorzugsweise in regelmäßigen Abständen automatisch oder auf Veranlassung durch den Bediener während des genannten Durchlaufens Ansichten aufzunehmen und dabei die genannte Umrandung (10, 10') oder den genannten Umrandungsteil (10") zu durchlaufen und am Ende des Durchgangs und gegebenenfalls nach Vorverarbeitung die aufgenommenen Bilder dem Roboter (1) zu übermitteln.

9. Verfahren nach irgendeinem der Patentansprüche 1 bis 5, **dadurch gekennzeichnet, dass** die Aufnahme von Koordinaten des Punktes (9,9') oder das Aufnehmen der Bilder unter Durchlaufen der betrachteten Umrandung (10, 10') oder des betrachteten Umrandungsteils (10") unter ähnlichen Bedingungen erfolgt, wie denen, die die Positionsbestimmungsvorrichtung (3) des Roboters (1) bei der Bearbeitung des entsprechenden umgrenzten Arbeitsbereichs (6) erfährt.

10. Verfahren nach Patentanspruch 2, **dadurch gekennzeichnet, dass** der Ausschlussbereich (6') innerhalb eines Arbeitsbereichs (6) vom Roboter (1) unter Anwendung anderer Parameter, Merkmale, Häufigkeiten und/oder Bearbeitungsbedingungen bearbeitet wird, als den zur Bearbeitung des Restes des Arbeitsbereichs (6) angewendeten.

11. Verfahren nach irgendeinem der Patentansprüche 1 bis 10, **dadurch gekennzeichnet, dass** es darin besteht, im Rahmen einer Änderung des vom Roboter (1) zu bearbeitenden Arbeitsbereiches mindestens einen zusätzlichen Arbeitsbereich (6') außerhalb und getrennt von einem bestehenden Arbeitsbereich (6) zu umgrenzen, indem mit Hilfe der tragbaren Vorrichtung (7) eine Berücksichtigung neuer Positionen und/oder neuer Punkte (9'), die gemeinsam mindestens eine neue Umrandung (10'") definieren, die den genannten mindestens einen zusätzlichen Arbeitsbereich (6') festlegt, wobei der Roboter (1) in der Lage ist, sich zwischen den verschiedenen Arbeitsbereichen (6, 6') zu bewegen.

12. Verfahren nach irgendeinem der Patentansprüche 1 bis 11, **dadurch gekennzeichnet, dass** es darin besteht, im Rahmen einer Änderung oder Anpassung des vom Roboter (1) zu bearbeitenden Arbeitsbereiches den bestehenden Arbeitsbereich oder neuen Arbeitsbereich (6) in mindestens zwei komplementäre Einzelbereiche (6") zu unterteilen, von denen jeder vom Roboter (1) unter Anwendung anderer Parameter, Merkmale, Häufigkeiten und/oder Bearbeitungsbedingungen bearbeitet wird, als den zur Bearbeitung des Restes des Arbeitsbereichs (6) angewendeten, wobei die anschließenden Einzelbereiche (6") durch Randlinien oder Grenzen (10") voneinander getrennt werden, die mit Hilfe der tragbaren Vorrichtung (7) durch eine Berücksichtigung neuer Positionen und/oder neuer Punkte (9') festgelegt werden.

13. System zur Bearbeitung eines Arbeitsbereiches durch Roboter, geeignet und dazu bestimmt, das Verfahren nach irgendeinem der Patentansprüche 1 bis 12 anzuwenden, wobei das genannte System mindestens einen Bodenbearbeitungsroboter umfasst, umfassend eine Kontroll- und Steuereinheit, eine Vorrichtung zur absoluten oder relativen Positionsbestimmung, ein Datenspeicherungsmittel und ein Übertragungsmodul,
System, **dadurch gekennzeichnet, dass** es weiterhin mindestens eine tragbare Vorrichtung (7) umfasst, die mit einem Modul (8) zur absoluten oder relativen Geolokalisation und/oder zur Aufnahme von Bildern versehen ist, das mit dem des Roboters (1) kompatibel ist, wobei diese tragbare Vorrichtung (7) geeignet und dazu bestimmt ist, Positionsinformationen zu ermitteln, die mehrere Positionen oder Punkte (9, 9') über eine oder mehrere Umrandung(en) (10, 10', 10"'), die den genannten Arbeitsbereich (6) umgrenzen, zu bestimmen und diese Informationen dem Roboter (1) zu übermitteln, und dadurch, dass die Kontroll- und Steuereinheit (2) des Roboters (1) in der Lage und dazu bestimmt ist, automatisch eine Kartographie und/oder eine Strategie der Bewegungen des Roboters (1) für den nach Einfügen der genannten Daten virtuell umgrenzten Arbeitsbereich (6) zu definieren.

14. System nach Patentanspruch 13, **dadurch gekennzeichnet, dass** die tragbare Vorrichtung (7) die Form eines Werkzeugs mit einem Griff (12) vorzugsweise einstellbarer Länge aufweist, das in aufrechter Stellung durch einen Bediener verwendet werden kann und einerseits an seinem unteren Ende einen Ortungskopf (11) aufweist, der mit einer Geolokalisationsantenne (11') und/oder einem Bildaufnahmemodul versehen ist, und andererseits an seinem oberen Ende eine Einheit von Arbeitsmitteln (8, 14, 14', 15) zur Erfassung und Übertragung von Positionsbestimmungsinformationen, wie etwa Bildern und/oder Koordinaten von Positionen oder geographischen Punkten (9, 9'), an die der Ortungskopf (11) oder das Bildaufnahmemodul nacheinander gebracht wird, vorzugsweise im Wesentlichen in Bodenhöhe.

15. System nach irgendeinem der Patentansprüche 13 und 14, **dadurch gekennzeichnet, dass** die Einheit von Arbeitsmitteln der tragbaren Vorrichtung (7) insbesondere in einem Schutzgehäuse (13) ein Verarbeitungs- und Betriebsmodul (14) umfasst, dem ein Speicher (14') zugehört, ein Modul (8) zur Aufnahme und gegebenenfalls Verarbeitung von Bildern und/oder absoluten oder relativen Geolokalisationskoordinaten, ein Modul (15) zur bidirektionalen Übertragung für die Kommunikation mit dem Roboter (1) und eine wiederaufladbare, netzunabhängige Stromversorgungsquelle (16), wobei das genannte Werkzeug mit Griff (7) eine tragbare Vorrichtung zur Geolokalisation geographischer Punkte (9, 9') und/oder zur Aufnahme von Ansichten bildet, die außerdem eine Schnittstelle (17) zur Kommunikation mit dem Bediener, beispielsweise mit einem Bildschirm und Bedienungs- und/oder Dateneingabemitteln umfasst.

## Claims

1. Method for implementing a soil treatment robot, more particularly an automated lawnmower or lawn mowing robot, comprising a control and steering unit, a device for absolute or relative positioning, a data storage unit and a transmission module,
the method being **characterised in that** it consists, before said robot (1) tackles a new working area or modified working area (6), of recording positioning information by means of an adapted handheld device (7), equipped with an absolute or relative geopositioning module (8) and/or image recording module, compatible with the positioning device (3) of the robot (1), said positioning information determining a plurality of positions or points (9, 9') along the perimeter(s) (10, 10') delimiting said working area (6), transferring said information to the robot (1), possibly after correction by using at least one local fixed point local, and defining automatically a map and/or a movement strategy for the robot (1) for the working area (6) delimited virtually after incorporating said information.

2. Method according to claim 1, **characterised in that** it consists, in case of a partial and/or additional modification of a working area (6), for which the virtual delimitation is recorded on the robot (1), of recording by means of the handheld device (7) only position information of new positions or new points (9') corresponding to or belonging to the modified part (10") of the perimeter and/or an additional part (10") of the perimeter, and refreshing the recorded virtual delimitation by transmitting to the robot (1) only this new position information, the modified perimeter(s) having relative to the recorded perimeter(s) either at least one portion of the modified perimeter (10"), contiguous to a non-modified part of the recorded perimeter, and extending or restricting the corresponding working area (6) to the recorded perimeter (10, 10'), or at least a second or other closed perimeter (10") independent of the recorded perimeter (10, 10'), and delimiting at least one exclusion zone (6') in the working area (6) defined peripherally, and possibly in the interior by said recorded perimeter(s) (10, 10').

3. Method according to any of claims 1 and 2, **characterised in that** the positioning information, recorded by means of the handheld device (7) and transmitted to the robot (1) to be recorded there, consists of viewpoints from positions along the perimeter(s) (10, 10') delimiting the working area (6), the control and guiding unit (2) of the robot (1) comparing permanently, during the processing of the working area (6) considered, images provided by a vision system equipping said robot (1) with said recorded viewpoints, in order to determine the relative position of said robot (1) to the perimeter(s) (10, 10').

4. Method according to any of claims 1 and 2, **characterised in that** positioning information consists of coordinates of discrete points (9, 9') forming part of the perimeter(s) (10, 10'), the robot (1) being equipped with a device (3) for absolute or relative geopositioning compatible with the geopositioning module (8) of the handheld device (7) and using the coordinates of the points (9, 9') recorded and transmitted previously by the latter with a view to determining the position of said robot (1) relative to the perimeter(s) (10, 10').

5. Method according to any of claims 1, 2 and 4, **characterised in that** it consists of forming from the coordinates of points (9, 9') distributed along the new perimeter (10, 10') or part of the additional and/or modified perimeter (10, 10'), in a control and steering unit (2), an extrapolation between neighbouring points (9, 9') so as to arrive at a definition of a path of a virtually continuous perimeter, in particular with regard to the resolution of the geopositioning device (3) of the robot (1) and of the whole corresponding geopositioning system.

6. Method according to any of claims 1 to 5, **characterised in that** it consists, in the case of modifying a perimeter (10, 10') or an already recorded working area (6), of making a connection between the unchanged part(s) of the perimeter (10, 10') and the modified part(s) of the perimeter (10"), with in particular each time a definition of adjacent positions or last end points (9) of the unchanged part of the recorded perimeter (10, 10'), ensuring the connection to new points or new positions (9') corresponding to the added and/or modified part of the perimeter.

7. Method according to any of claims 1, 2 and 4 to 6, **characterised in that** recording the coordinates of points (9, 9') distributed along a new perimeter (10, 10') or an additional or modified part (10") of a recorded perimeter consists of displacing a head pointer (11) provided with a geopositioning aerial (11') and preferably mounted at the lower end of a handle (12) of the handheld device (7), in the form of a manual handle tool, along the perimeter (10, 10') or the part of the perimeter (10") to be recorded, capturing successively, and preferably at regular intervals, automatically or at the request of the operator, coordinates of consecutive points (9, 9') delineating said perimeter (10, 10') or said part of the perimeter (10") and, at the end of the process, and possibly after preprocessing, transmitting corresponding geopositioning data to the robot (1).

8. Method according to any of claims 1 to 3 and 6, **characterised in that** recording viewpoints of a new perimeter (10, 10') or an additional or modified part (10") of a recorded perimeter consists of moving the handheld device (7) provided of the module (8) for capturing views along the perimeter (10, 10') or the part of the perimeter (10") to be recorded, performing successively, continually or preferably at regular intervals, automatically or at the request of the user, the capturing of images during said displacement and, at the end of the process, transmitting the acquired images, possibly after preprocessing, to the robot (1).

9. Method according to any of claims 1 to 5, **characterised in that** the recording of point coordinates (9, 9') or capturing of images delineating the perimeter (10, 10') or the part of the perimeter (10") concerned is performed in similar conditions to those encountered by the positioning device (3) of the robot (1) while working the corresponding delimited working area (6).

10. Method according to claim 2, **characterised in that** the internal exclusion zone (6') of a working area (6) is worked by the robot (1) by applying different parameters, characteristics, frequencies and/or processing conditions than those applied for processing the rest of the working area (6).

11. Method according to any of claims 1 to 10, **characterised in that** it consists, when modifying the working area to be worked by the robot (1), of delimiting at least one additional working area (6') external to and separated from an existing working area (6), by carrying out by means of the handheld device (7) the capturing of new positions and/or new points (9') jointly defining at least one new perimeter (10"') which determines said at least one additional working area (6'), the robot (1) being able to move between the different working zones (6, 6').

12. Method according to any of claims 1 to 11, **characterised in that** it consists, when modifying or adapting the working area (6) of processing by the robot (1), subdividing the existing working area or new working area (6) into at least two complementary elementary zones (6") each of which is worked by the robot (1) by applying parameters, characteristics, frequencies and/or processing conditions different from those applied for working the rest of the working area (6), the adjacent elementary zones (6") being separated by border lines or boundaries (10") determined by means of the handheld device (7) by taking into account new positions and/or new points (9').

13. System for the robotised processing of a working area, which is capable of and is designed to implement the method according to any of claims 1 to 12, said system comprising at least one robot for working the ground comprising a control and steering unit, a device for absolute or relative positioning, a data storage means and a transmission module,
the system being **characterised in that** it also comprises at least one handheld device (7), equipped with an absolute or relative geopositioning module (8) and/or image capturing module, compatible with that of the robot (1), said handheld device (7) being able to and designed to record positioning information, determining a plurality of positions or points (9, 9') along one or more perimeter(s) (10, 10', 10") delimiting said working area (6) and transferring this information to the robot (1), and **in that** the control and steering unit (2) of the robot (1) is capable of and is designed to define automatically a map and/or robot displacement strategy (1) for the delimited working area (6) virtually after the incorporation of said information.

14. System according to claim 13, **characterised in that** the handheld device (7) is in the form of a tool with a handle (12), preferably having an adjustable length, which can be used in an upright position by an operator and comprising on the one hand at its lower end a head pointer (11) provided with a geopositioning aerial (11') and/or an image capturing module and on the other at its upper end a group of operating means (8, 14, 14', 15) for acquiring and transmitting positioning information, such as images and/or coordinates of geographic positions or points (9, 9'), at which the head pointer (11) or the image capturing module is positioned successively, preferably substantially on the ground.

15. System according to any of claims 13 and 14, **characterised in that** the group of operating means of the handheld device (7) comprises in particular, installed into a protective housing (13), a processing and managing module (14), to which a storage memory (14') is connected, a module (8) for acquiring and possibly processing images and/or absolute or relative geopositioning coordinates, a bidirectional transmission module (15) for communicating with the robot (1) and a rechargeable autonomous power source (16), said handle tool (7) forming a handheld geographic point geopositioning device (9, 9') and/or image capturing device, also having an interface (17) for communicating with the operator, for example by means of a visualisation screen and control and/or data entry units.
